# EUROPEAN PATENT APPLICATION

(11) **EP 2 845 704 A1**
(43) Date of publication of application: **11.03.2015**
(21) Application number: 14181465.7
(22) Date of filing: 19.08.2014
(51) Int. Cl.: B28C 5/42

(54) **Assembly adapted to wash a mobile sedimentitious/cementitious material container or mixer**

(30) Priority: 05.09.2013 GB 201315840
(71) Applicant: Hymix Limited, Telford, Shropshire, TF3 3BD (GB)
(72) Inventor: Metzger, Stephen, Telford, Shropshire TF3 3AY (GB); Humpish, Nick, Telford, shropshire TF3 3AY (GB)
(74) Representative: Strachan, Victoria Jane

(57) **Abstract**

An assembly (100) adapted to wash a mobile sedimentitious/cementitous material container or mixer, the assembly including:
an assembly fixing arrangement (102) for, in use, fixing the assembly to a vehicle or trailer;
a waste tank (126) located on the assembly fixing arrangement, and
a waste tank moving arrangement (144) for moving the waste tank between a waste storing position and a waste emptying position.

## Description

The present invention relates to washing a mobile sedimentitious/cementitious material container or mixer.

It is known to provide vehicles or trailers that include containers/drums for mixing or holding sedimentitious/cementitious materials, such as concrete, mortar, floor screed, or the like. Washing such apparatus regularly is important because the waste material can set and cause damage. However, it was conventionally difficult to wash such apparatus at work sites because it resulted in waste dispersing all over the area. Depending on the nature of the material in question, this could cause environmental problems due to undesirable pH levels.

A known solution to the above problem was to provide an assembly that included a tank positioned below the egress end of a chute from which most waste water/material would be discharged during the washing process. This type of conventional tank was emptied by opening one or more valves on relatively small apertures located on its lower elevations and or underside to allow water to flow out whilst the tank remained static. However, it was found that much waste material still remained inside the tank after attempting to empty it (even though conduits for allowing water to flush the tank were provided in some cases), which could still cause problems. Further, because there was no easy access to the interior of this type of conventional tank, it was difficult to flush/clean effectively.

Embodiments of the present invention are intended to address at least some of the abovementioned problems.

According to one aspect of the present invention there is provided an assembly adapted to wash a mobile sedimentitious/cementitious material container or mixer, the assembly including or comprising:
an assembly fixing arrangement for, in use, fixing the assembly to a vehicle or trailer;
a waste tank located on the assembly fixing arrangement, and
a waste tank moving arrangement for moving the waste tank between a waste storing position and a waste emptying position.

The waste tank moving arrangement may pivotally move the waste tank between the waste storing position and the waste emptying position. The waste tank may be pivotable by means of at least one pivotable mounting, e.g. pin/spindle, connected to at least one of its surfaces. The at least one surface may be provided with external struts to which the at least one pivotable mounting is attached. The moving arrangement may comprise at least one rotating device that, in use, engages a said pivotable mounting and causes the pivotable mounting (and the waste tank) to rotate. A said rotating device may be powered by a dedicated power supply, or by power/actuation mechanisms that also perform other functions. The at least one rotating device may cause the waste tank to rotate by around 90° between the waste storing position and the waste emptying position.

The waste tank may be generally box-shaped. The waste tank may include a partially or fully open face, typically its uppermost face in the waste storing position. Alternatively, the open face could be an upper section of a side or end face.

The assembly may further include a catchment tray or the like that, in use, receives waste material produced by a washing operation. The tray may include a sieve. The tray may be inclined towards (and/or include a conduit leading to) the waste tank. The tank could be in the form of a catchment tray or The assembly may further include a lid for the waste tank.

The waste tank may, in use, be fixed between chassis rails of a vehicle/trailer, typically at a rear end.

The waste tank moving arrangement may comprise manual, mechanical, electromechanical, pneumatic or hydraulic means (or a mixture of two or more of these) to move the waste tank between the waste storing position and the waste emptying position.

The assembly may further include a rotatable drum; a ladder; a platform; at least one hose; a discharge hopper; a pan chute; a catchment tray; a charge hopper, and/or storage locations for chutes.

According to another aspect of the present invention there is provided a mobile sedimentitious/cementitious material container or mixer (such as a vehicle or trailer) including an assembly substantially as described herein.

According to yet another aspect of the present invention there is provided a method of washing a mobile sedimentitious/cementitious material container or mixer using an assembly substantially as described herein.

According to another aspect of the present invention there is provided an assembly adapted to wash a mobile sedimentitious/cementitious material container or mixer, the assembly including:
a waste tank directly or indirectly mounted on a vehicle or trailer, wherein the waste tank is physically moveable by means of a moving mechanism between a waste storing position and a waste emptying position.

Whilst the invention has been described above, it extends to any inventive combination of features set out above or in the following description. Although illustrative embodiments of the invention are described in detail herein with reference to the accompanying drawing, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawing in which:
Figure 1 is a rear off-side view of part of a mobile sedimentitious/cementitious material mixer assembly that can be mounted on a vehicle in use;
Figure 2 is a rear near-side view of part of the mobile sedimentitious/cementitious material mixer assembly;
Figure 3 details the area labelled A in Figure 1;
Figure 4 details the area labelled B in Figure 2, showing a tank in a waste storing position, and
Figure 5 details the waste tank in a waste emptying position.

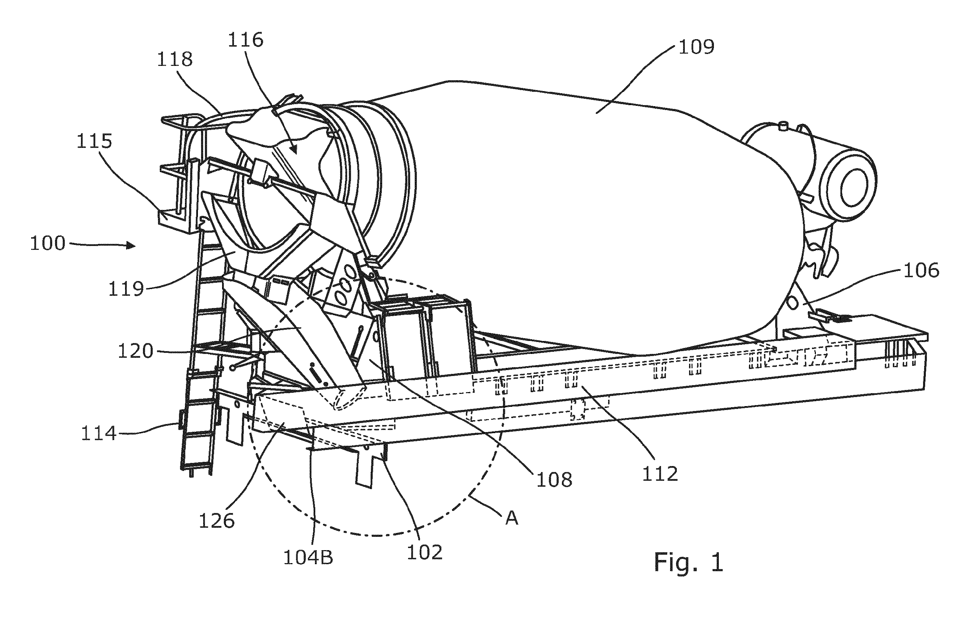

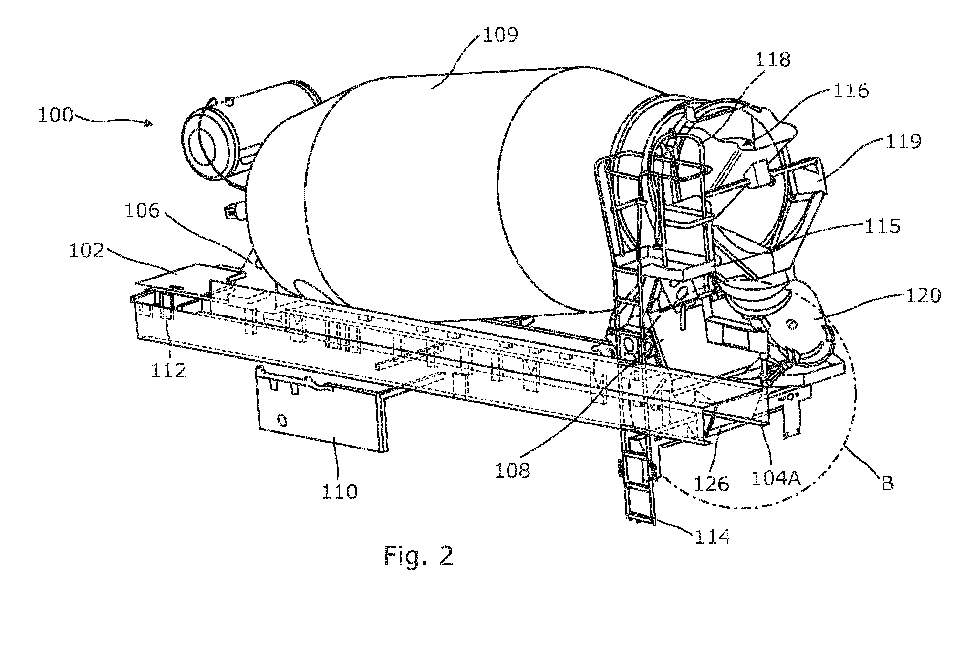

Referring to Figures 1 and 2 initially, an example assembly 100 includes a frame 102 that, in use, is fixed to first and second chassis rails 104A, 104B of a vehicle/trailer (not shown). The example frame includes a front support stool 106 and a rear support stool 108 upon which, in use, a rotatable mixing drum 109 is mounted, as well as various plates 110, cross members 112 and other components that can be used to fix the frame to the vehicle/trailer. The frame may include components similar to those of the P-Series available from Hymix Limited of Telford, United Kingdom; however, it will be understood that the design and dimensions of the frame can vary and may be altered to fit a particular vehicle/trailer or other installation. For instance, further components such as mud guards, side guards and lamp assemblies can be included. The general construction and features of such frames/components are known to the skilled person and need not be described herein in detail. The frame and other assembly components will typically be formed of steel, but it will be appreciated that other suitable materials can be used.

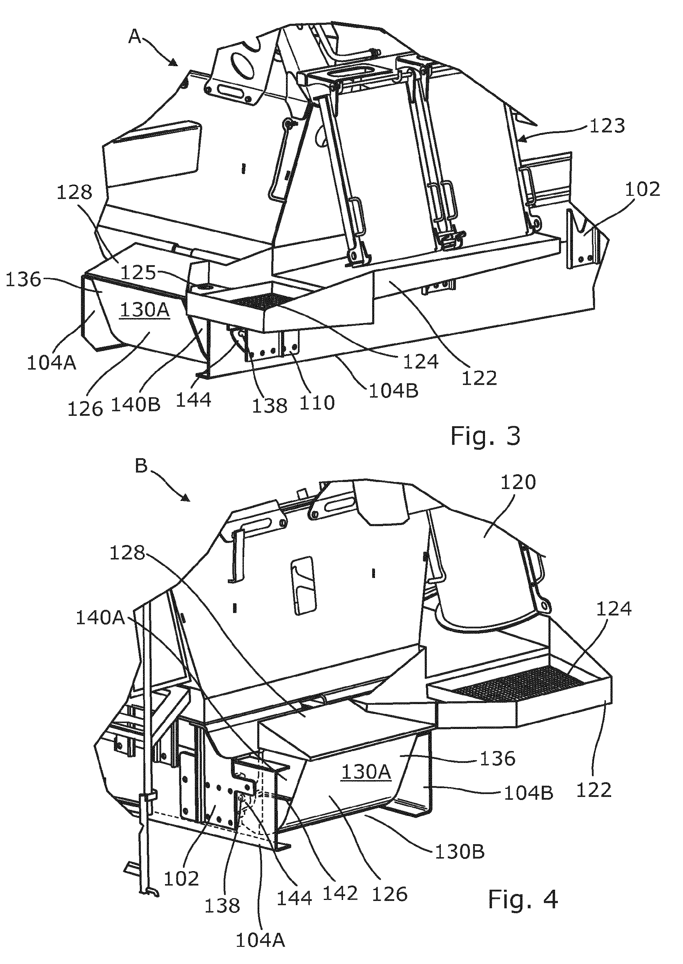

The rear end of the assembly 100 can further include a ladder 114 and platform 115 that allow a worker to access the mouth 116 of the drum 109 to perform a washing operation. At least one hose 118 (typically connected to an on-board pressurised water supply) may also be provided. The illustrated example (see Figure 1) also has a discharge hopper 119 located below the drum mouth. An adjustable pan chute 120 can be located below the discharge hopper. Referring to Figure 4, it can be seen that the discharge end of the pan chute is positioned above a catchment tray 122 that may include an aggregate sieve 124. Again, such components are generally known to the skilled person and it will be appreciated that embodiments of the assembly need not include all of the illustrated components and/or may include additional components, such as an adjustable charge hopper, storage location 123 for at least one spare chute, and so on.

As shown in Figure 3, the catchment tray 122 can include an aperture 125 that, in use, receives a pipe (not shown) or other conduit that leads to a waste tank 126 that is fixed between the two chassis rails 104A, 104B. During the washing operation, the user uses the hose 118 to spray clean water into the drum 109 and other components and dirty water then passes out into the discharge hopper 119. The user positions the chute 120 above the catchment tray 122, as generally shown in Figure 4, to receive the dirty water. After passing through the sieve 124, the majority of the waste material that then passes into the tank 126 will comprise water, but it will be understood that it may also include other materials.

A lid 128 is provided for the tank 126 in the example assembly 100, which can include an aperture (not shown) for receiving waste into the tank from the tray aperture 125 via the pipe mentioned above. It will be appreciated that in alternative embodiments, waste can be transferred to the tank 126 in a different manner. For instance, a pipe/conduit may lead directly into a side/front/rear wall of the tank, rather than through the optional lid. Alternatively, part of the tray (or other component(s) that collects waste during the washing operation) may be inclined towards an opening of the tank, or the tank could include an integrated waste collector or the like.

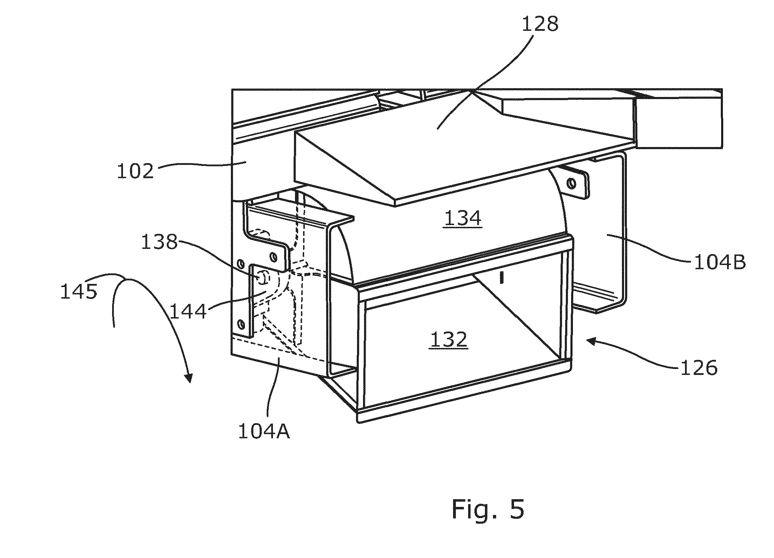

In the illustrated example, the tank 126 has a box-shaped upper portion 130A and a generally semi-cylindrical lower portion 130B. As can be seen in in Figure 5, the box-shaped upper portion 130A has an open face 132 and the rear surface 134 of at least the upper portion of the tank is rounded, whilst its front surface 136 is generally flat. The capacity of the tank in the example is around 80 litres. The dimensions of the open face of the tank are around 600 x 300 mm.

The tank 126 is pivotably mounted on the assembly 100, between the chassis rails 104A, 104B, by means of pivot pins 138 that are connected to each of its side surfaces 140A, 140B. The side surfaces may be provided with external strengthening struts 142 to which the pivot pins are attached.

The assembly 100 further includes at least one arrangement for moving the tank 126 between its waste storing position (as generally shown in Figures 3 and 4) and its waste emptying position (as generally show in Figure 5). In the illustrated example, the tank moving arrangement comprises rotating devices 144 connected to each of the pivot pins 138. In other embodiments, the rotating devices do not use the struts and act directly on the pivot.

Each rotating device may be connected to a motor (not shown) and may be powered by dedicated power supplies or by power/actuation mechanisms that also perform other functions, e.g. rotate the drum 109. Each rotating device engages with the pivot pin (e.g. a toothed or threaded portion of it) and can cause it to rotate in either direction, thereby moving the tank between the waste storing and emptying positions. In the illustrated example, the rotating devices cause the tank to rotate by around 90° from its waste storing position to the waste emptying position shown in Figure 5 (as illustrated by arrow 145). After the waste has been emptied from the tank, and any further washing operations performed on the interior of the tank via its exposed open face 132, the rotating devices can be used to return the tank to its waste storing position.

It will be appreciated that many variations to the assembly described above are possible. For instance, the tank could be located at some other position where it can receive waste material from the catchment tray, or from some other component(s) where water collects during the washing process (typically, water that has passed through a sieve/filter). The tank may receive waste material that has been pumped to it, allowing the tank to be positioned elsewhere on the vehicle. Further, the design of the tank can vary. For instance, it need not have a fully open face through which the waste is emptied; it could comprise more than one compartment, etc. The lid is optional and could be moveable, e.g. slide or pivot open/close. In some cases, movement of the waste tank from the storing position to the emptying position may automatically open the lid in use.

The way in which the tank moves between the waste storing position and the waste emptying position can also vary from the pivoting motion of the illustrated example. For instance, the tank could be arranged so that it is rotated about an axis parallel to the main axis of the vehicle/assembly so that its (fully or partially) open face is turned upside down to empty its contents; there could be one or more tanks fitted on a conveyor belt that tips it/them empty, and so on. The movement from the waste emptying position back to the waste storing position need not be a reverse action of the movement from the waste storing position to the waste emptying position (or vice versa). Manual (with user control/handle), mechanical, electromechanical, pneumatic, hydraulic means (or a mixture of two or more of these) may be used to activate the movement of the tank between the waste storage and emptying positions.

Embodiments of the assembly may be (permanently or releasably) fitted to an existing vehicle/trailer that is ready configured to receive a mixer/container of this general type; they could be retrofitted onto a vehicle/trailer originally fitted with a different assembly, or they may be built/integrated into a vehicle/trailer during manufacture of the vehicle/trailer. Embodiments of the assembly provide a washing system that is easy to operate and results in effective emptying of waste. After the material has been emptied from the tank, its design makes it easy to further wash its inside using a hose or the like.

## Claims

1. An assembly (100) adapted to wash a mobile sedimentitious/cementitous material container or mixer, the assembly including:
an assembly fixing arrangement (102) for, in use, fixing the assembly to a vehicle or trailer;
a waste tank (126) located on the assembly fixing arrangement, and
a waste tank moving arrangement (144) for moving the waste tank between a waste storing position and a waste emptying position.

2. An assembly according to claim 1, wherein the waste tank moving arrangement (144) pivotally moves the waste tank (126) between the waste storing position and the waste emptying position.

3. An assembly according to claim 2, wherein the waste tank (126) is pivotable by means of at least one pivotable mounting (138) connected to at least one of its surfaces (140).

4. An assembly according to claim 3, wherein the at least one surface (140) is be provided with external struts (142) to which the at least one pivotable mounting (138) is attached.

5. An assembly according to claim 4, wherein the moving arrangement comprises at least one rotating device (144) that, in use, engages a said pivotable mounting (138) and causes the pivotable mounting and the waste tank (126) to rotate.

6. An assembly according to claim 5, wherein the at least one rotating device (144) causes the waste tank (126) to rotate by around 90° between the waste storing position and the waste emptying position.

7. An assembly according to any one of the preceding claims, wherein the waste tank (126) is generally box-shaped and/or includes a partially or fully open face (132).

8. An assembly according to claim 7, wherein the open face (132) is an uppermost face of the tank (126) when in the waste storing position.

9. An assembly according to any one of the preceding claims, further including a catchment tray (122) that, in use, receives waste material produced by a washing operation, wherein the tray may include a sieve (124), and/or is inclined towards (and/or includes a conduit (125) leading to) the waste tank (126).

10. An assembly according to any one of the preceding claims, further including a lid (128) for the waste tank (126).

11. An assembly according to any one of the preceding claims, where, the waste tank (126) is, in use, be located between chassis rails (104) of a vehicle/trailer.

12. An assembly according to any one of the preceding claims, wherein the waste tank moving arrangement (144) comprises manual, mechanical, electromechanical, pneumatic or hydraulic means (or a mixture of two or more of these) to move the waste tank (126) between the waste storing position and the waste emptying position.

13. An assembly according to any one of the preceding claims, wherein the assembly (100) further includes a rotatable drum (109); a ladder (114); a platform (116); at least one hose (118); a discharge hopper (119); a pan chute (120); a charge hopper, and/or storage locations (123) for chutes.

14. A mobile sedimentitious/cementitious material container or mixer (such as a vehicle or trailer) including an assembly according to any one of the preceding claims.

15. An assembly adapted to wash a mobile sedimentitious/cementitious material container or mixer, the assembly including:
a waste container (126) directly or indirectly mounted on a vehicle or trailer, wherein the waste container is physically moveable by means of a control mechanism (144) between a waste storing position and a waste emptying position.
